# EUROPÄISCHE PATENTANMELDUNG

(11) **EP 3 715 693 A1**
(43) Veröffentlichungstag der Anmeldung: **30.09.2020**
(21) Anmeldenummer: 20161208.2
(22) Anmeldetag: 05.03.2020
(51) Int. Cl.: F16L 37/56, F16L 41/03, E03C 1/02, F16L 39/00

(54) **ANSCHLUSSEINRICHTUNG**

(30) Priorität: 29.03.2019 DE 102019002256
(71) Anmelder: Grohe AG, 58675 Hemer (DE)
(72) Erfinder: WOESTHOFF, Wulf, 58675 Hemer (DE); SCHLÜTER, Matthias, 44289 Dortmund (DE); MAINKA, David, 58640 Iserlohn (DE)

(57) **Zusammenfassung**

Anschlusseinrichtung (1) für mindestens eine erste Fluidleitung (2) und eine zweite Fluidleitung (3), zumindest umfassend mindestens zwei Anschlüsse (4, 5), einen Sammelleitungsanschluss (6) und zwei Durchleitungen zur fluidtechnischen Verbindung jeweils einen Anschlusses (4, 5) mit dem Sammelleitungsanschluss (6); wobei die erste Fluidleitung (2) an einem ersten Anschluss (4) und die zweite Fluidleitung (3) an einem zweiten Anschluss (5) anschließbar ist, wobei in dem Sammelleitungsanschluss (6) eine mit der ersten Fluidleitung (2) über den ersten Anschluss (4) fluidtechnisch verbindbare erste Durchleitung mit einem ersten Ende und eine mit der zweiten Fluidleitung (3) über den zweiten Anschluss (5) fluidtechnisch verbindbare zweite Durchleitung mit einem zweiten Ende mündet.

## Beschreibung

Die Erfindung betrifft eine Anschlusseinrichtung für eine Mehrzahl von Fluidleitungen. Die Anschlusseinrichtung ist insbesondere Teil einer sanitären Anlage, z. B. zur Durchleitung von unterschiedlichen Fluiden (z. B. karbonisiertes Wasser, karbonisiertes und mit Aroma versetztes Wasser, hoch erhitztes Wasser, z. B. bis zu 100 Grad Celsius, kaltes Wasser mit weniger als ca. 20 Grad Celsius, warmes Wasser - zumindest wärmer als das kalte Wasser, temperiertes Wasser - also eine bereits vorgenommene Mischung von kaltem und warmem Wasser). Das durch die Anschlusseinrichtung geleitete Fluid ist insbesondere Wasser (z. B. Leitungswasser).

Es sind Anschlusseinrichtungen zur Durchleitung von mehreren Fluiden bekannt. Diese weisen mehrere Anschlüsse zur Einleitung von Fluiden in die Anschlusseinrichtung, Durchleitungen durch die Anschlusseinrichtung und Anschlüsse zur Weitergabe der Fluide auf. Dabei ist eine gleiche Anzahl von Anschlüssen zur Einleitung und Anschlüssen zur Weitergabe vorgesehen. An jeden Anschluss zur Weitergabe ist eine eigene Leitung (z. B. ein Schlauch) mit jeweils einem Lumen angeschlossen. Diese einzelnen Schläuche werden stromabwärts der Anschlusseinrichtung zusammengeführt und enden dann ggf. in einer gemeinsamen Armatur.

Aufgabe der vorliegenden Erfindung ist es, eine kompaktere Anschlusseinrichtung bereitzustellen.

Zur Lösung dieser Aufgabe trägt eine Anschlusseinrichtung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Anschlusseinrichtung für mindestens eine erste Fluidleitung und eine zweite Fluidleitung vorgeschlagen. Die Anschlusseinrichtung umfasst zumindest
- mindestens zwei Anschlüsse,
- einen Sammelleitungsanschluss und
- zwei Durchleitungen zur fluidtechnischen Verbindung von jeweils einem der Anschlüsse mit dem Sammelleitungsanschluss.
Die erste Fluidleitung ist an einem ersten Anschluss der Anschlusseinrichtung und die zweite Fluidleitung an einem zweiten Anschluss der Anschlusseinrichtung anschließbar. In dem Sammelleitungsanschluss mündet eine mit der ersten Fluidleitung über den ersten Anschluss fluidtechnisch verbindbare erste Durchleitung mit einem ersten Ende und eine mit der zweiten Fluidleitung über den zweiten Anschluss fluidtechnisch verbindbare zweite Durchleitung mit einem zweiten Ende, so dass eine Sammelleitung mit mindestens einem ersten Lumen und einem zweiten Lumen über den Sammelleitungsanschluss an der Anschlusseinrichtung anordenbar ist, so dass das erste Lumen über das erste Ende mit der ersten Durchleitung und das zweite Lumen über das zweite Ende mit der zweiten Durchleitung verbindbar ist.

Es wird hier insbesondere vorgeschlagen, an der Anschlusseinrichtung einen gemeinsamen Anschluss (den Sammelleitungsanschluss) zur Weiterleitung der Fluide ausgehend von der Anschlusseinrichtung anzuordnen. Der Sammelleitungsanschluss ermöglicht (ausschließlich) eine gleichzeitige Verbindung der Enden mit den Lumen der Sammelleitung. Eine getrennt voneinander vorzunehmende Verbindung jeweils eines Endes mit jeweils einem Lumen ist nicht möglich.

Insbesondere kann so die Anschlusseinrichtung kleiner und kompakter ausgeführt werden, da keine separaten und räumlich voneinander beabstandeten Anschlüsse zur Weiterleitung der Fluide vorgesehen werden müssen.

Insbesondere weist die Anschlusseinrichtung zumindest einen dritten Anschluss zum Anschluss einer dritten Fluidleitung und eine dritte Durchleitung mit einem dritten Ende auf, das in dem Sammelleitungsanschluss mündet, so dass die Sammelleitung mit zusätzlich einem dritten Lumen über den Sammelleitungsanschluss an der Anschlusseinrichtung anordenbar ist, so dass zusätzlich das dritte Lumen über das dritte Ende mit der dritten Durchleitung verbindbar ist.

Die Anschlusseinrichtung ist insbesondere Teil einer sanitären Anlage, z. B. zur Durchleitung von unterschiedlichen Fluiden (z. B. karbonisiertes Wasser, karbonisiertes und mit Aroma versetztes Wasser, hoch erhitztes Wasser, z. B. bis zu 100 Grad Celsius, kaltes Wasser mit weniger als ca. 20 Grad Celsius, warmes Wasser - zumindest wärmer als das kalte Wasser, temperiertes Wasser - also eine bereits vorgenommene Mischung von kaltem und warmem Wasser). Das durch die Anschlusseinrichtung geleitete Fluid ist insbesondere Wasser (z. B. Leitungswasser).

Die erste Fluidleitung dient z. B. dazu, ca. 100 Grad Celsius heißes Wasser bzw. siedendes Wasser durchzuleiten. Die zweite Fluidleitung dient z. B. dazu, temperiertes Wasser durchzuleiten. Die dritte Fluidleitung dient z. B. dazu, (gekühltes) karbonisiertes Wasser (karbonisiertes und mit Aroma versetztes Wasser) durchzuleiten.

Insbesondere sind die Enden in dem Sammelleitungsanschluss nebeneinander angeordnet. Die Enden können konzentrisch zueinander (also jeweils ringförmig um z. B. ein kreisförmiges inneres Ende) oder in ggf. freier Anordnung nebeneinander angeordnet sein.

Insbesondere enden die Enden auf einer gemeinsamen Höhe (gegenüber der axialen Richtung). Insbesondere wird so jedes Ende gleichzeitig mit dem jeweiligen Lumen einer Sammelleitung verbunden, wenn diese an dem Sammelleitungsanschluss angeordnet wird.

Insbesondere verläuft ein Strömungspfad jedes Fluids ausgehend von dem jeweiligen Anschluss bis hin zum jeweiligen Ende fluidtechnisch von den anderen Strömungspfaden getrennt. Der erste Strömungspfad verläuft ausgehend von der ersten Fluidleitung über den ersten Anschluss in die erste Durchleitung und über das erste Ende ggf. in das erste Lumen. Das gleiche gilt jeweils entsprechend für alle anderen Strömungspfade.

Insbesondere weist der Sammelleitungsanschluss ein die bzw. alle Enden umgebendes Außengewinde und eine an dem Außengewinde angeordnete Befestigungsmutter auf, wobei die Befestigungsmutter eine Aufnahme und darin einen Klemmring zur Verbindung mit der Sammelleitung aufweist.

Insbesondere kann der Klemmring auch in anderer Weise an dem Sammelleitungsanschluss angeordnet werden.

Der Klemmring dient insbesondere dazu, dass (z. B. bei einer nicht konzentrischen Anordnung der Enden) die Sammelleitung ausschließlich entlang einer axialen Richtung (also parallel zur Erstreckung der Enden der Durchleitungen) auf die Enden aufgeschoben werden kann. Eine Verdrehung der Sammelleitung gegenüber dem Sammelleitungsanschluss ist nicht erforderlich, kann jedoch bei konzentrischer Anordnung der Enden möglich sein.

Insbesondere wird die Sammelleitung auf den Sammelleitungsanschluss (oder auf die Befestigungsmutter mit dem Klemmring) aufgeschoben und bildet dabei mit dem Klemmring (der sich zwischenzeitlich elastisch verformen, z. B. auf einen größeren Durchmesser aufweiten oder auf einen kleineren Durchmesser verkleinern, kann) eine gegenüber der axialen Richtung formschlüssige Verbindung. Infolge der formschlüssigen Verbindung sind dann die Lumen, insbesondere fluiddicht, mit dem jeweiligen Ende verbunden, so dass getrennt voneinander verlaufende Strömungspfade realisiert sind.

Die Befestigungsmutter ist insbesondere drehbar an der Sammelleitung angeordnet und mit der Sammelleitung über eine, gegenüber der axialen Richtung formschlüssige, Verbindung (und nicht über einen Klemmring, sondern ggf. über einen Anschlag an der Sammelleitung) verbunden. Die Sammelleitung kann dann über eine Befestigung der Befestigungsmutter an dem Außengewinde des Sammelleitungsanschlusses angeordnet werden, wobei über die Verschraubung der Befestigungsmutter die Lumen der Sammelleitung ausschließlich entlang der axialen Richtung auf die jeweiligen Enden aufgeschoben oder in die jeweiligen Enden eingeschoben werden.

Es wird eine Sammelleitung vorgeschlagen, die zumindest ein erstes Lumen und ein zweites Lumen aufweist. Insbesondere erstrecken sich das erste Lumen und das zweite Lumen gemeinsam durch die Sammelleitung, wobei die Sammelleitung mit einem Ende an dem (einzigen) Sammelleitungsanschluss und mit dem anderen Ende z. B. an einer Armatur anschließbar bzw. angeschlossen ist.

Insbesondere weist die Sammelleitung zusätzlich ein drittes Lumen auf.

Insbesondere ist die Sammelleitung in eine Aufnahme des Sammelleitungsanschlusses zur fluidtechnischen Verbindung der Lumen mit den Enden (ausschließlich) entlang einer axialen Richtung einschiebbar.

Insbesondere ist die Sammelleitung in der Aufnahme durch ein ausschließlich entlang der axialen Richtung erfolgendes Einschieben und über eine darüber gebildete, gegenüber der axialen Richtung wirkende, formschlüssige Verbindung anordenbar.

Die Ausführungen zu der Anschlussvorrichtung sind insbesondere auf die Sammelleitung übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder einen Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Anschlussvorrichtung mit einer Sammelleitung in einer perspektivischen Ansicht;
- Fig. 2:: die Anschlussvorrichtung mit der Sammelleitung, nach Fig. 1, teilweise im Schnitt, in einer perspektivischen Ansicht;
- Fig. 3:: die Anschlussvorrichtung nach Fig. 1 und 2, in einem ersten Schnitt, in einer perspektivischen Ansicht; und
- Fig. 4:: die Anschlussvorrichtung nach Fig. 1 und 2, in einem zweiten Schnitt, in einer perspektivischen Ansicht.

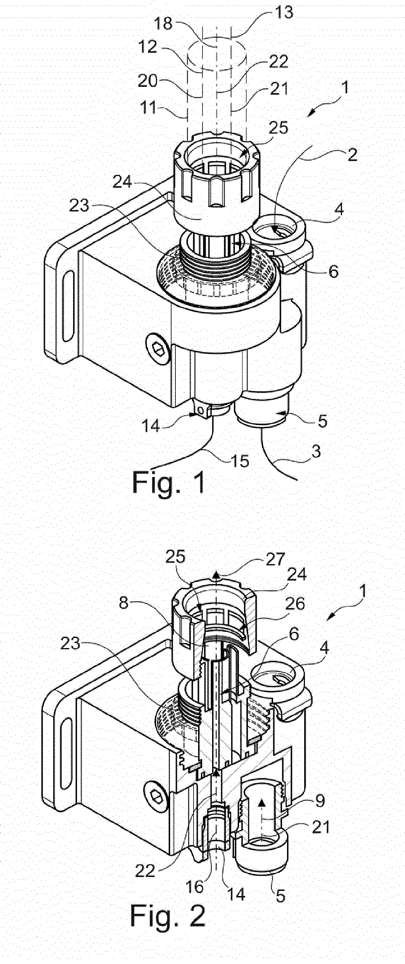

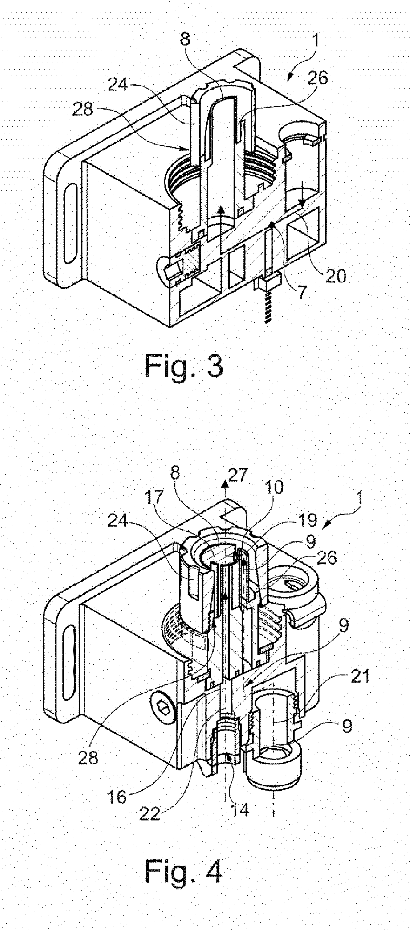

Die Fig. 1 zeigt eine Anschlussvorrichtung 1 mit einer Sammelleitung 11 in einer perspektivischen Ansicht. Fig. 2 zeigt die Anschlussvorrichtung 1 mit der Sammelleitung 11, nach Fig. 1, teilweise im Schnitt, in einer perspektivischen Ansicht. Fig. 3 zeigt die Anschlussvorrichtung 1 nach Fig. 1 und 2, in einem ersten Schnitt, in einer perspektivischen Ansicht. Fig. 4 zeigt die Anschlussvorrichtung 1 nach Fig. 1 und 2, in einem zweiten Schnitt, in einer perspektivischen Ansicht. Die Fig. 1 bis 4 werden im Folgenden gemeinsam beschrieben.

Die Anschlusseinrichtung 1 umfasst drei Anschlüsse 4, 5, 14, einen Sammelleitungsanschluss 6 und drei Durchleitungen 7, 9, 16 zur fluidtechnischen Verbindung von jeweils einem der Anschlüsse 4, 5, 14 mit dem Sammelleitungsanschluss 6. Die erste Fluidleitung 2 ist an einem ersten Anschluss 4 der Anschlusseinrichtung 1 und die zweite Fluidleitung 3 an einem zweiten Anschluss 5 der Anschlusseinrichtung 1 anschließbar bzw. angeschlossen. Weiter ist die dritte Fluidleitung 15 an einem dritten Anschluss 14 anschließbar bzw. angeschlossen. In dem Sammelleitungsanschluss 6 mündet eine mit der ersten Fluidleitung 2 über den ersten Anschluss 4 fluidtechnisch verbundene erste Durchleitung 7 mit einem ersten Ende 8 und eine mit der zweiten Fluidleitung 3 über den zweiten Anschluss 5 fluidtechnisch verbundene zweite Durchleitung 9 mit einem zweiten Ende 10 sowie eine mit der dritten Fluidleitung 15 über den dritten Anschluss 14 fluidtechnisch verbundene dritte Durchleitung 16 mit einem dritten Ende 17. Eine Sammelleitung 11 ist mit einem ersten Lumen 12, einem zweiten Lumen 13 sowie einem dritten Lumen 18 über den Sammelleitungsanschluss 6 an der Anschlusseinrichtung 1 angeordnet, so dass das erste Lumen 12 über das erste Ende 8 mit der ersten Durchleitung 7, das zweite Lumen 13 über das zweite Ende 10 mit der zweiten Durchleitung 9 und das dritte Lumen 18 über das dritte Ende 17 mit der dritten Durchleitung 18 verbunden (siehe Fig. 1).

An der Anschlusseinrichtung 1 ist ein gemeinsamer Anschluss (der Sammelleitungsanschluss 6) zur Weiterleitung der Fluide ausgehend von der Anschlusseinrichtung 1 angeordnet.

Die Enden 8, 10, 17 sind in dem Sammelleitungsanschluss 6 nebeneinander angeordnet. Die Enden 8, 10, 17 sind in einer im Wesentlichen freien Anordnung (also nicht konzentrisch) nebeneinander angeordnet. Die Enden 8, 10, 17 enden auf einer gemeinsamen Höhe 19 gegenüber der axialen Richtung 27.

Ein Strömungspfad 20, 21, 22 jedes Fluids verläuft ausgehend von dem jeweiligen Anschluss 4, 5, 14 bis hin zum jeweiligen Ende 8, 10, 17 fluidtechnisch von den anderen Strömungspfaden 22, 21, 20 getrennt. Der erste Strömungspfad 20 verläuft ausgehend von der ersten Fluidleitung 2 über den ersten Anschluss 4 in die erste Durchleitung 7 und über das erste Ende 8 in das erste Lumen 20. Der zweite Strömungspfad 21 verläuft ausgehend von der zweiten Fluidleitung 3 über den zweiten Anschluss 5 in die zweite Durchleitung 9 und über das zweite Ende 10 in das zweite Lumen 21. Der dritte Strömungspfad 22 verläuft ausgehend von der dritten Fluidleitung 15 über den dritten Anschluss 14 in die dritte Durchleitung 16 und über das dritte Ende 18 in das dritte Lumen 22.

Der Sammelleitungsanschluss 6 weist ein die bzw. alle Enden 8, 10, 17 umgebendes Außengewinde 23 und eine an dem Außengewinde 23 angeordnete Befestigungsmutter 24 auf, wobei die Befestigungsmutter 24 eine Aufnahme 25 und darin einen Klemmring 26 zur Verbindung mit der Sammelleitung 11 aufweist.

Der Klemmring 26 dient dazu, dass die Sammelleitung 11 ausschließlich entlang einer axialen Richtung 27 (also parallel zur Erstreckung der Enden 8, 10, 17 der Durchleitungen 7, 9, 16) auf die Enden 8, 10, 27 aufgeschoben werden kann.

Die Sammelleitung 11 wird auf die Befestigungsmutter 24 mit dem Klemmring 26 aufgeschoben und bildet dabei mit dem Klemmring 26 (der sich zwischenzeitlich elastisch verformen, z. B. auf einen größeren Durchmesser aufweiten kann) eine gegenüber der axialen Richtung 27 formschlüssige Verbindung 28. Infolge der formschlüssigen Verbindung 28 sind die Lumen 12, 13, 18 fluiddicht mit dem jeweiligen Ende 8, 10, 17 verbunden, so dass getrennt voneinander verlaufende Strömungspfade 20, 21, 22 realisiert sind.

Die Befestigungsmutter 24 ist drehbar an der Sammelleitung 11 angeordnet und mit der Sammelleitung 11 über den Klemmring 26 verbunden. Die Sammelleitung 11 kann z. B. über eine Befestigung der Befestigungsmutter 24 an dem Außengewinde 23 des Sammelleitungsanschlusses 6 angeordnet werden, wobei über die Verschraubung der Befestigungsmutter 24 die Lumen 12, 13, 18 der Sammelleitung 11 ausschließlich entlang der axialen Richtung 27 auf die jeweiligen Enden 8, 10, 17 aufgeschoben oder in die jeweiligen Enden 8, 10, 17 eingeschoben werden.

Die Sammelleitung 11 weist ein erstes Lumen 20, ein zweites Lumen 21 und ein drittes Lumen 22 auf. Die Lumen 20, 21, 22 erstrecken sich gemeinsam durch die Sammelleitung 11, wobei die Sammelleitung 11 mit einem Ende an dem Sammelleitungsanschluss 6 und mit dem anderen Ende z. B. an einer Armatur anschließbar bzw. angeschlossen ist.

### Bezugszeichenliste

- 1: Anschlusseinrichtung
- 2: erste Fluidleitung
- 3: zweite Fluidleitung
- 4: erster Anschluss
- 5: zweiter Anschluss
- 6: Sammelleitungsanschluss
- 7: erste Durchleitung
- 8: erstes Ende
- 9: zweite Durchleitung
- 10: zweites Ende
- 11: Sammelleitung
- 12: erstes Lumen
- 13: zweites Lumen
- 14: dritter Anschluss
- 15: dritte Fluidleitung
- 16: dritte Durchleitung
- 17: drittes Ende
- 18: drittes Lumen
- 19: Höhe
- 20: erster Strömungspfad
- 21: zweiter Strömungspfad
- 22: dritter Strömungspfad
- 23: Außengewinde
- 24: Befestigungsmutter
- 25: Aufnahme
- 26: Klemmring
- 27: axiale Richtung
- 28: Verbindung

## Patentansprüche

1. Anschlusseinrichtung (1) für mindestens eine erste Fluidleitung (2) und eine zweite Fluidleitung (3), zumindest umfassend mindestens zwei Anschlüsse (4, 5), einen Sammelleitungsanschluss (6) und zwei Durchleitungen (7, 8) zur fluidtechnischen Verbindung jeweils einen Anschlusses (4, 5) mit dem Sammelleitungsanschluss (6); wobei die erste Fluidleitung (2) an einem ersten Anschluss (4) und die zweite Fluidleitung (3) an einem zweiten Anschluss (5) anschließbar ist, wobei in dem Sammelleitungsanschluss (6) eine mit der ersten Fluidleitung (2) über den ersten Anschluss (4) fluidtechnisch verbindbare erste Durchleitung (7) mit einem ersten Ende (8) und eine mit der zweiten Fluidleitung (3) über den zweiten Anschluss (5) fluidtechnisch verbindbare zweite Durchleitung (9) mit einem zweiten Ende (10) mündet, so dass eine Sammelleitung (11) mit mindestens einem ersten Lumen (12) und einem zweiten Lumen (13) über den Sammelleitungsanschluss (6) an der Anschlusseinrichtung (1) anordenbar ist, so dass das erste Lumen (12) über das erste Ende (8) mit der ersten Durchleitung (7) und das zweite Lumen (13) über das zweite Ende (10) mit der zweiten Durchleitung (9) verbindbar ist.

2. Anschlusseinrichtung (1) nach Patentanspruch 1, wobei die Anschlusseinrichtung (1) zumindest einen dritten Anschluss (14) zum Anschluss einer dritten Fluidleitung (15) und eine dritte Durchleitung (16) mit einem dritten Ende (17) aufweist, das in dem Sammelleitungsanschluss (6) mündet, so dass die Sammelleitung (11) mit zusätzlich einem dritten Lumen (18) über den Sammelleitungsanschluss (6) an der Anschlusseinrichtung (1) anordenbar ist, so dass zusätzlich das dritte Lumen (18) über das dritte Ende (17) mit der dritten Durchleitung (16) verbindbar ist.

3. Anschlusseinrichtung (1) nach einem der vorhergehenden Patentansprüche, wobei die Enden (8, 10, 17) in dem Sammelleitungsanschluss (6) nebeneinander angeordnet sind.

4. Anschlusseinrichtung (1) nach Patentanspruch 3, wobei die Enden (8, 10, 17) auf einer gemeinsamen Höhe (19) enden.

5. Anschlusseinrichtung (1) nach einem der vorhergehenden Patentansprüche, wobei ein Strömungspfad (20, 21, 22) jedes Fluids ausgehend von dem jeweiligen Anschluss (4, 5, 14) bis hin zum jeweiligen Ende (8, 10, 17) fluidtechnisch voneinander getrennt verläuft.

6. Anschlusseinrichtung (1) nach einem der vorhergehenden Patentansprüche, wobei der Sammelleitungsanschluss (6) ein die Enden (8, 10, 17) umgebendes Außengewinde (23) und eine an dem Außengewinde (23) angeordnete Befestigungsmutter (24) aufweist, wobei die Befestigungsmutter (24) eine Aufnahme (25) und darin einen Klemmring (26) zur Verbindung mit der Sammelleitung (11) aufweist.

7. Sammelleitung (11) für eine Anschlusseinrichtung (1) nach einem der vorhergehenden Patentansprüche, wobei die Sammelleitung (11) zumindest ein erstes Lumen (12) und ein zweites Lumen (13) aufweist.

8. Sammelleitung (11) nach Patentanspruch 7, wobei die Sammelleitung (11) zusätzlich ein drittes Lumen (18) aufweist.

9. Sammelleitung (11) nach einem der vorhergehenden Patentansprüche 7 und 8, wobei die Sammelleitung (11) in eine Aufnahme (25) des Sammelleitungsanschlusses (6) zur fluidtechnischen Verbindung der Lumen (12, 13, 18) mit den Enden (8, 10, 17) entlang einer axialen Richtung (27) einschiebbar ist.

10. Sammelleitung (11) nach Patentanspruch 9, wobei die Sammelleitung (11) in der Aufnahme (25) durch ein ausschließlich entlang der axialen Richtung (27) erfolgendes Einschieben und über eine darüber gebildete, gegenüber der axialen Richtung (27) wirkende, formschlüssige Verbindung (28) anordenbar ist.
